Europäisches Patentamt

European Patent Office

Office européen des brevets

(11) Numéro de publication: **0 442 343 A1**

## DEMANDE DE BREVET EUROPEEN

(21) Numéro de dépôt: **91101454.6**

(22) Date de dépôt: **04.02.91**

(51) Int. Cl.⁵: **G02B 6/44**, G02B 6/38, H02G 15/115

(30) Priorité: **09.02.90 FR 9001535**

(43) Date de publication de la demande:
**21.08.91 Bulletin 91/34**

(84) Etats contractants désignés:
**BE DE ES FR GB GR IT SE**

(71) Demandeur: **ALCATEL CABLE**
**30, rue des Chasses**
**F-92111 Clichy Cédex(FR)**

(72) Inventeur: **Dekeyser, Bernard**
**61, place d'Armes**
**F-62100 Calais(FR)**
Inventeur: **Troude, Roland**
**24, rue Leblond**
**F-62100 Calais(FR)**

(74) Mandataire: **Weinmiller, Jürgen et al**
**Lennéstrasse 9 Postfach 24**
**W-8133 Feldafing(DE)**

(54) **Boîte de jonction pour câble à fibres optiques.**

(57) La boîte de jonction pour câble à fibres optiques comporte deux flasques (4, 5) en forme générale d'entonnoir, de profil interne correspondant aux profils du fourreau (3) de raccordement des extrémités (1, 2) du câble à réunir, et de ces extrémités, et au moins un tube en matériau thermorétractable, rétreint sur les flasques. Elle est caractérisée en ce que lesdits flasques sont à gorges périphériques (14, 15, 16, 17) dans leur partie terminale de grand diamètre entourant le fourreau et leur partie terminale de petit diamètre entourant les zones du câble adjacentes au fourreau et que chaque tube en matériau thermorétractable est enduit sur sa face interne d'un matériau d'étanchéité venant remplir les gorges des flasques.

FIG.1

FIG.2

FIG.3

EP 0 442 343 A1

## BOÎTE DE JONCTION POUR CÂBLE À FIBRES OPTIQUES

La présente invention concerne une boîte de jonction pour câble à fibres optiques. Elle s'applique plus particulièrement aux jonctions sans répéteur de câbles sous-marins à fibres optiques.

Le document GB-A-2 192 732 décrit notamment un dispositif de protection d'une épissure de fibre optique, réalisée dans un tube ou fourreau d'épissurage. Ce dispositif comporte deux tubes de protection, en forme d'entonnoir sensiblement, enfilés au départ sur les extrémités des deux fibres initiales à raccorder et dont la partie terminale de grand diamètre de chacun d'eux vient recouvrir la partie terminale adjacente du fourreau d'épissurage. Il comporte en outre un manchon rétractable recouvrant les parties terminaleg de grand diamètre de ces deux tubes de protection, non jointives qui entourent le fourreau.

On a jusqu'ici assuré la protection d'une jonction de câbles à fibres optiques en disposant autour des extrémités des câbles à réunir et du fourreau de jonction un moule, puis en injectant dans ce moule un matériau thermo-plastique. Ce procédé nécessite cependant un temps de mise en oeuvre relativement long et un matériel de jonctionnement et de contrôle coûteux et encombrant.

La présente invention a pour but de procurer une boîte de jonction pour câble qui assure également un jonctionnement résistant à une pression externe d'eau et une bonne protection mécanique du raccordement, mais qui soit de mise en oeuvre plus facile et plus rapide, et ne nécessite qu'un matériel peu coûteux et réduit.

Elle a pour objet une boîte de jonction de câble à fibres optiques, reçue sur un fourreau de raccordement de deux câbles initiaux, comportant deux flasques en forme générale d'entonnoir, présentant chacun une première partie cylindrique de grand diamètre et une deuxième partie cylindrique de petit diamètre reliées par une partie intermédiaire tronconique, insérés sur les parties terminales opposées dudit fourreau, lesdits flasques recouvrant au moins partiellement ledit fourreau et entourant les zones adjacentes desdits câbles, d'un côté et de l'autre dudit fourreau, et comportant un premier tube en matériau thermorétractable, rétreint sur les premières parties cylindriques de grand diamètre des flasques, et des moyens d'étanchéité entre les deuxièmes parties cylindriques de petit diamètre des flasques et lesdits câbles initiaux, caractérisée en ce que lesdits flasques sont munis de gorges circulaires périphériques sur la surface externe desdites première et deuxième parties cylindriques, en ce que ledit premier tube est enduit sur sa surface interne d'un matériau d'étanchéité et en ce que lesdits moyens d'étanchéité sont constitués par deux deuxièmes tubes en matériau thermorétractable, enduits sur leur surface interne de matériau d'étanchéité et rétreints sur la deuxième partie cylindrique de petit diamètre desdits flasques et sur lesdites zones adjacentes desdits câbles.

Les flasques sont de préférence en polyéthylène à haute densité. Ils ont leurs extrémités de grand diamètre emboîtées l'une dans l'autre.

Le matériau d'étanchéité d'enduction de la face interne des tubes thermorétractables est avantageusement du bitume. Les gorges périphériques desdits flasques sont remplies de matériau d'étanchéité, celui-ci résultant de refoulement du matériau enduit sur la face interne des tubes, après leur rétraction.

Il est décrit ci-après, à titre d'exemple et en référence aux figures du dessin annexé, une boîte de jonction selon l'invention et son procédé de montage.

La figure 1 représente la boîte de jonction avant emboîtement de ses deux flasques.

La figure 2 la représente après leur emboîtement, mais avant la mise en place des tubes thermorétractables.

La figure 3 la représente terminée, après la mise en place de ces tubes et leur rétraction.

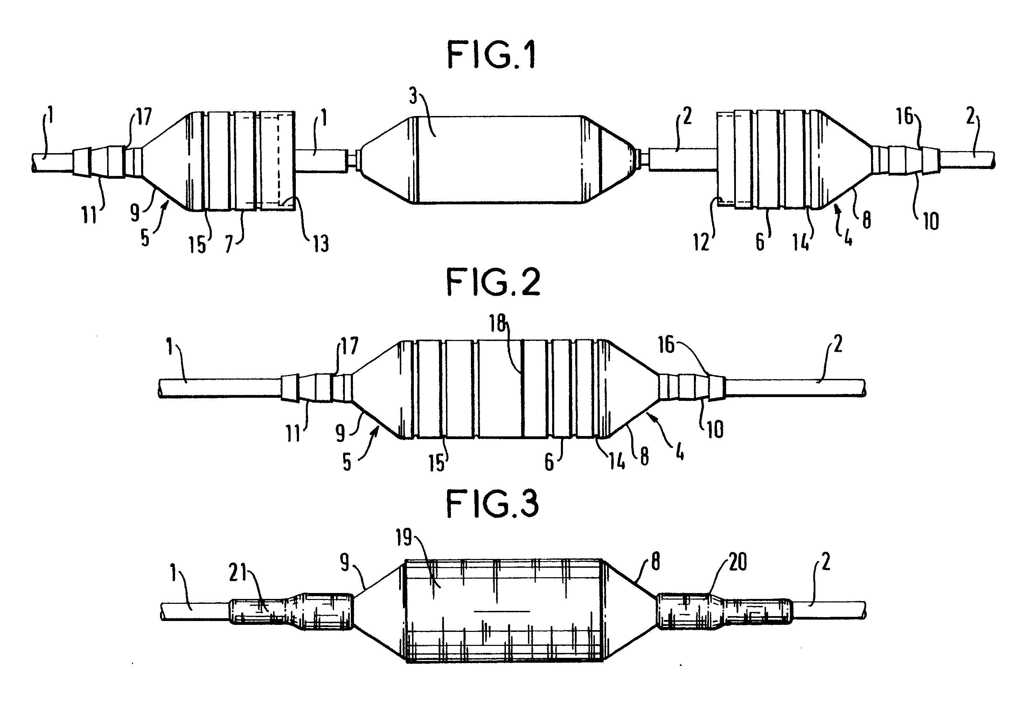

Dans la figure 1, les extrémités du câble 1 et 2 sont réunies par le fourreau 3. Sur ces extrémités sont disposés les flasques 4, 5 comportant respectivement une partie de grand diamètre (6, 7), de diamètre interne correspondant à celui du fourreau, une partie tronconique (8, 9) et une partie de petit diamètre (10, 11), de diamètre interne correspondant à celui des extrémités du câble. Le flasque 4 comporte une extrémité mâle 12, destinée à s'emboîter dans l'extrémité femelle 13 du flasque 5. Sur la surface externe des flasques sont disposées des rainures circulaires, telles que 14, 15 pour leurs parties de grand diamètre et 16, 18 pour leurs parties de petit diamètre.

Dans la figure 2, les flasques 4, 5 ont été emboîtés au-dessus du fourreau 3, et se raccordent selon un cercle 18.

Dans la figure 3, il a été disposé autour des parties cylindriques de grand diamètre des flasques un tube thermorétractable 19 en polyoléfine à haute flexibilité et basse température de rétreint, telle que la polyoléfine commercialisés sous la marque "RT-102" par la société RAYCHEM, enduit de bitume sur sa face interne, et autour de leurs parties cylindriques de petit diamètre des tubes thermorétractables 20, 21 également enduits de bitume sur leur face interne, puis ces tubes ont été soumis à un chauffage assurant leur rétraction et le refoulement du bitume dans les rainures de ces parties cylindriques, assurant ainsi une excellente étanchéité, même en présence d'une pression d'eau extérieure élevée.

**Revendications**

1. Boîte de jonction de câble à fibres optiques, reçue sur un fourreau (3) de raccordement de deux câbles initiaux (1, 2), comportant deux flasques (4, 5) en forme générale d'entonnoir, présentant chacun une première partie cylindrique de grand diamètre (6, 7) et une deuxième partie cylindrique de petit diamètre (10, 11) reliées par une partie intermédiaire tronconique (8, 9), insérés sur les parties terminales opposées dudit fourreau (3), lesdits flasques recouvrant au moins partiellement ledit fourreau et entourant les zones adjacentes desdits câbles, d'un côté et de l'autre dudit fourreau, et comportant un premier tube en matériau thermorétractable (19), rétreint sur les premières parties cylindriques de grand diamètre des flasques, et des moyens d'étanchéité entre les deuxièmes parties cylindriques de petit diamètre des flasques et lesdits câbles initiaux, caractérisée en ce que lesdits flasques sont munis de gorges circulaires périphériques (14, 15 ; 16, 17) sur la surface externe desdites première et deuxième parties cylindriques, en ce que ledit premier tube est enduit sur sa surface interne d'un matériau d'étanchéité et en ce que lesdits moyens d'étanchéité sont constitués par deux deuxièmes tubes en matériau thermorétractable (20, 21), enduits sur leur surface interne de matériau d'étanchéité et rétreints sur la deuxième partie cylindrique de petit diamètre desdits flasques et sur lesdites zones adjacentes desdits câbles.

2. Boîte de jonction selon la revendication 1, caractérisée en ce que les flasques (4, 5) sont en polyéthylène à haute densité.

3. Boîte de jonction selon les revendications 1 ou 2, caractérisée en ce que le matériau d'étanchéité desdits tubes thermorétractables est du bitume.

4. Boîte de jonction selon l'une des revendications 1 à 3, caractérisée en ce que lesdits flasques (4, 5) ont un alésage mâle (12) et un alésage femelle (13) d'emboîtement des extrémités de leur première partie cylindrique de grand diamètre.

5. Boîte de jonction selon l'une des revendications 1 à 4, caractérisée en ce que lesdites gorges périphériques (14, 15 ; 16, 17) desdits flasques sont remplies de matériau d'étanchéité résultant de refoulement du matériau enduit sur la surface interne desdits tubes après leur rétraction.

# FIG.1

# FIG.2

# FIG.3

EP 0 442 343 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D | GB-A-2 192 732   (N.V. RAYCHEM S.A.)<br>* page 8, lignes 26-81; figures 9a-c,11; revendications 1-8 * | 1 | G 02 B 6/44<br>G 02 B 6/38<br>H 02 G 15/115 |
| Y | DE-A-3 236 064   (SIEMENS)<br>* revendications 1,5; figures 1,2 * | 1 | |
| A | EP-A-0 066 829   (CABLES DE LYON)<br>* page 5, lignes 24-33; figures 1,3 * | 1,2 | |
| A | PATENT ABSTRACTS OF JAPAN vol. 11, no. 252 (P-605)(2699), 15 août 1987;<br>& JP - A - 6256907 (NTT), 12.03.1987<br>* le document en entier * | 1 | |
| A | EP-A-0 051 109   (WALTER ROSE GMBH & CO. KG)<br>* figures 1,3-5; page 2, ligne 6 - page 3, ligne 23 * | 1,4 | |
| A | DE-C-3 804 497   (STEWING BETON- UND FERTIGTEIL-WERK)<br>* abrégé; figure 1 * | 1 | |
| A | EP-A-0 209 399   (RAYCHEM CORP.)<br>* colonne 1, lignes 28-46; figure 5 * | 1,5 | DOMAINES TECHNIQUES RECHERCHES (Int. Cl.5)<br><br>G 02 B 6/00<br>H 02 G 15/00 |

Le présent rapport de recherche a été établi pour toutes les revendications

| Lieu de la recherche | Date d'achèvement de la recherche | Examinateur |
|---|---|---|
| Berlin | 22 avril 91 | VON MOERS F |